(19) 

**Europäisches Patentamt**
**European Patent Office**
**Office européen des brevets**

(11) **EP 4 564 801 A1**

(12) **EUROPEAN PATENT APPLICATION**

(43) Date of publication:
**04.06.2025 Bulletin 2025/23**

(21) Application number: **24216578.5**

(22) Date of filing: **29.11.2024**

(51) International Patent Classification (IPC):
*H04N 1/60* (2006.01)   *G06T 5/60* (2024.01)
*G06T 7/90* (2017.01)   *G06V 10/56* (2022.01)

(52) Cooperative Patent Classification (CPC):
**H04N 1/6086; G06T 7/90; G06V 10/56;**
**H04N 1/6077;** G06T 2207/10024

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.11.2023 KR 20230171076**

(71) Applicant: **Samsung Electronics Co., Ltd.**
**Suwon-si, Gyeonggi-do 16677 (KR)**

(72) Inventors:
- **YU, Junsang**
  **16678 Suwon-Si (KR)**
- **KWON, Kinam**
  **16678 Suwon-Si (KR)**
- **SO, Seo Hee**
  **16678 Suwon-Si (KR)**
- **KIM, Insoo**
  **16678 Suwon-Si (KR)**
- **LEE, Hyong Euk**
  **16678 Suwon-Si (KR)**

(74) Representative: **Arnold & Siedsma**
**Bezuidenhoutseweg 57**
**2594 AC The Hague (NL)**

(54) **METHOD AND APPARATUS WITH IMAGE CORRECTION**

(57)    An electronic device includes a method performed by an electronic device. The method includes: extracting, from an input image, original illuminant information representing an original illuminant color-cast of the input image, the extracting performed by applying an illuminant information extraction model to the input image; generating, from the original illuminant information, intermediate illuminant information representing an intermediate illuminant color-cast of the input image, the generating performed by applying an illuminant information generation model to the original illuminant information; determining target illuminant information based on the extracted original illuminant information and based on the generated intermediate illuminant information; and generating an output image by applying the determined target illuminant information to the input image.

**FIG. 1**

EP 4 564 801 A1

**Description**

BACKGROUND

1. Field

The following description relates to an image correction technology.

2. Description of Related Art

White balancing (WB) an image of a scene may require estimating the color of an illuminant in the scene to remove a color-cast from the scene due to the illuminant. WB imitates the color constancy of a human visual system and is one of the core elements of an in-camera imaging pipeline for providing visually satisfying imaging. WB, or computational color constancy, has long been a subject discussed in the field of computer vision.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a method performed by an electronic device includes: extracting, from an input image, original illuminant information representing an original illuminant color-cast of the input image, the extracting performed by applying an illuminant information extraction model to the input image; generating, from the original illuminant information, intermediate illuminant information representing an intermediate illuminant color-cast of the input image, the generating performed by applying an illuminant information generation model to the original illuminant information; determining target illuminant information based on the extracted original illuminant information and based on the generated intermediate illuminant information; and generating an output image by applying the determined target illuminant information to the input image.

The determining of the target illuminant information may include combining at least a portion of the original illuminant information and at least a portion of the intermediate illuminant information.

The generating of the output image may include: removing the intermediate illuminant color-cast from the input image and adding a color-cast of the target illuminant information to the input image.

The determining of the target illuminant information may include: obtaining a user input and according thereto controlling contribution of the original illuminant information or the intermediate illuminant information to the target illuminant information.

The method may further include: outputting an embedding vector produced by the illuminant information extraction model in extracting the original illuminant information from the input image, wherein the intermediate illuminant information is generated by applying the illuminant information generation model to the embedding vector of the input image and to the original illuminant information.

The method may further include: determining whether to apply the illuminant information extraction model and the illuminant information generation model to the input image, based on color diversity of the input image.

The determining of whether to apply the illuminant information extraction model and the illuminant information generation model to the input image based on the color diversity of the input image may include: performing linear regression on pixel values of pixels of the input image; and determining a color diversity score based on a difference between a result of the linear regression and the pixel values, the color diversity score indicating the color diversity.

The determining of whether to apply the illuminant information extraction model and the illuminant information generation model to the input image based on the color diversity of the input image may include: determining a color diversity score of the input image by applying a color diversity determination model to the input image.

The method may further include: determining whether to apply the illuminant information extraction model and the illuminant information generation model to the input image, based on a score for a gray pixel corresponding to an achromatic-color object in the input image.

The method may further include: determining candidate gray pixels from among pixels of the input image based on a pixel value and a gray locus mapped to an achromatic-color object; detecting a fake gray pixel corresponding to a chromatic-color object from among the determined candidate gray pixels; and based on the detected fake gray pixel, either generating the original illuminant information, generating the intermediate illuminant information, determining the target illuminant information, or generating the output image.

The illuminant information extraction model may include a first convolutional neural network and the illuminant information generation model may include a second convolutional neural network.

In another general aspect, an electronic device includes: one or more processors; and memory storing instructions configured to cause the one or more processors to: extract, from an input image, original illuminant information representing an original illuminant color-cast of the input image, the extracting performed by applying an illuminant information extraction model to the input image; generate intermediate illuminant information representing an intermediate color-cast of the input image by applying an illuminant information generation model to the original illuminant information; determine target illuminant information based on the extracted original illuminant information based on and the generated intermediate illuminant information; and generate an output image by applying the determined target illuminant information to the input image.

The instructions may be further configured to cause the one or more processors to: determine the target illuminant information by combining at least a portion of the original illuminant information and at least a portion of the intermediate illuminant information.

The instructions may be further configured to cause the one or more processors to: remove the intermediate illuminant color-cast from the input image and add a color-cast of the target illuminant information to the input image.

The instructions may be further configured to cause the one or more processors to: obtain a user input and according thereto controlling contribution of the original illuminant information or the intermediate illuminant information to the target illumination information.

The instructions may be further configured to cause the one or more processors to: output an embedding vector produced by the illuminant information extraction model in extracting the original illuminant information from the input image; and generate the intermediate illuminant information by applying the illuminant information generation model to the embedding vector of the input image and to the original illuminant information.

The instructions may be further configured to cause the one or more processors to: determine whether to apply the illuminant information extraction model and the illuminant information generation model to the input image, based on color diversity of the input image.

The instructions may be further configured to cause the one or more processors to: perform linear regression on pixel values of pixels of the input image; and determine a color diversity score based on a difference between a result of the linear regression and the pixel values, the color diversity score indicating the color diversity.

The instructions may be further configured to cause the one or more processors to: determine whether to apply the illuminant information extraction model and the illuminant information generation model to the input image based on a score for a gray pixel corresponding to an achromatic-color object in the input image.

The instructions may be further configured to cause the one or more processors to: determine candidate gray pixels from among pixels in the input image based on a pixel value and a gray locus mapped to an achromatic-color object; detect a fake gray pixel corresponding to a chromatic-color object from among the determined candidate gray pixels; and based on the detected fake gray pixel, either generate the original illuminant information, generate the intermediate illuminant information, determine the target illuminant information, or generate the output image

Other features and aspects will be apparent from the following detailed description, the drawings, and the claims.

BRIEF DESCRIPTION OF THE DRAWINGS

FIG. 1 illustrates an example image correction method according to one or more example embodiments.
FIG. 2 illustrates an example of generating an output image by correcting an input image, according to one or more example embodiments.
FIG. 3 illustrates an example of generating an output image based on color diversity of an input image, according to one or more example embodiments.
FIG. 4 illustrates an example of generating an output image based on a gray pixel-related score of an input image, according to one or more example embodiments.
FIG. 5 illustrates an example of correcting an image using a fake gray pixel, according to one or more example embodiments.
FIG. 6 illustrates an example of correcting an image using multiple white balance (WB) methods, according to one or more example embodiments.
FIG. 7 illustrates an example configuration of an electronic device according to one or more example embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

A white object may be sensed as a color other than white (e.g., a yellowish color) by a camera sensor and/or image sensor due to lighting by an illuminant (e.g., an incandescent lamp emitting warm light). In digital image processing, white balance or white balancing (WB) aims to reproduce, in an image, a phenomenon where a person perceives as white, in the image, an object having an actually chromaticity corresponding to white. WB may correct a color distortion in an image by removing a color-cast occurring due to the chromaticity of an illuminant throughout the image. As described below, an image correction method of one or more example embodiments of the present disclosure, which is provided to perform WB, may convert an input image into a white-balanced output image based on inference performed by a neural network model on the input image.

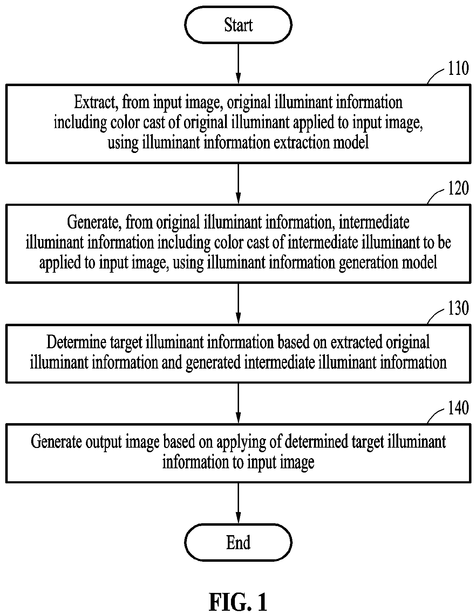

FIG. 1 illustrates an example of an image correction method according to one or more example embodiments.

In operation 110, the electronic device may extract original illuminant information from an input image by applying an illuminant information extraction model. The term "original" is used herein to distinguish from other illuminant information, e.g., "intermediate" illuminant information; the term is not intended to otherwise characterize the original illuminant information. A similar remark applies to "intermediate"; such information may also be referred to as "first illuminant information" and "second illuminant information". For example, the electronic device may extract the original illuminant information by applying the illuminant information extraction model to the input image which performs inference on the input image to generate the original illuminant information.

The input image may be an image captured based on light reflected from a scene that comes from an original illuminant (e.g., lamp, sun, etc.). The input image includes a pixels. Each of the pixels may have multiple values. For example, a pixel value may include an R-value corresponding to red, a G-value corresponding to green, and a B-value corresponding to blue. Incidentally, the "original illuminant information" may represent any illuminant aspect of the input image and need not represent an actual illuminant of the scene captured in the input image.

Each pixel of the input image may have a pixel value in which a chromaticity of the original illuminant reflected from an object according to a chromaticity of the object. Different chromaticities of different objects are reflected in the pixel values of pixels that correspond to those objects. A color-cast of an illuminant may be an influence of a chromaticity of the illuminant on a pixel value of an image. For example, a pixel may have a pixel value including a greater G-value when a corresponding image is captured of a scene receiving light from a second illuminant with a chromaticity corresponding to green, compared to the pixel's G-value when the image is captured when the scene receives light from a first illuminant with a chromaticity corresponding to white.

The original illuminant information may be information indicating a chromaticity and/or color of the original illuminant of at least a portion of a scene captured in the input image. The original illuminant information may include the color-cast of the original illuminant applied to the input image. According to one or more example embodiments, the original illuminant information may include at least one of an R-value, a G-value, or a B-value indicating the chromaticity and/or color of the original illuminant. According to one or more example embodiments, the original illuminant information may indicate the chromaticities and/or colors of the original illuminant for respective partial area(s) of the input image. The original illuminant information may include pixels respectively corresponding to the pixels of the input image, and each pixel of the original illuminant information may have a pixel value including an R-value, a G-value, or a B-value indicating the chromaticity and/or color of the original illuminant.

The aforementioned illuminant information extraction model may be a model generated and/or trained to output (by inference), from arbitrary input images, respective the original illuminant information associated with the original illuminants applied to the input images. According to one or more example embodiments, the illuminant information extraction model may be implemented based on a machine learning model and may be/include, for example, a neural network (e.g., a convolutional neural network (CNN)).

According to one or more example embodiments, the neural network may include layers of nodes. The nodes of each layer may have connections to nodes of an adjacent layer. The neural network may also include connection weights (e.g., parameters) of the respective connections between the nodes. The layers of the neural network may include for example, an input layer, one or more hidden layers, and an output layer. In the neural network, input data may be propagated through the layers starting from the input layer to the output layer. During the propagation, abstracted feature data (e.g., feature vectors or feature maps) may be extracted from the input data (e.g., input image), and output data may be generated from the feature data.

According to one or more example embodiments, the illuminant information extraction model may be trained using training data including training input images associated with respective ground truth (GT) labels indicating original illuminant information of the training input images. When the illuminant information extraction model is being trained (hereinafter referred to as a "temporary illuminant information extraction model") and is applied to a training input image, temporary original illuminant information may be outputted. The temporary illuminant information extraction model may be trained through supervised learning using the GT original illuminant information as a GT. For example, a loss may be calculated based on a difference between the temporary original illuminant information and the GT original illuminant information. The parameters of the temporary illuminant information extraction model may be iteratively updated based on the calculated loss such that the loss converges to a value that is smaller than a predetermined value (e.g., a cutoff threshold). This updating process may be performed for each training input image. After the iterative updating of the parameters of the temporary illuminant information extraction model, the updating of the parameters of the temporary illuminant information extraction model may be stopped and the temporary illuminant information extraction model may be used as the trained illuminant information extraction model. As mentioned next, the temporary illuminant information extraction model may also be trained to output an embedding vector.

According to one or more example embodiments, when the input image is applied to the trained illuminant information extraction model, the electronic device's illuminant information extraction model may infer and output both (i) the original illuminant information and (ii) an embedding vector of the input image. The embedding vector may include information related to the generation of the original illuminant information by the illuminant information extraction model.

The embedding vector of the input image may be/include a vector related to a property of the input image. The property of the input image may include semantic information about the scene in the input image. For example, the property of the input image, which may be inferred by the trained illuminant information extraction model, may include a category of an object in the input image, a mood of a scene in the input image, and/or a texture of at least a portion of the input image. The embedding vector of the input image may be obtained as at least one convolution layer and/or at least one fully connected layer are being applied to the input image.

The embedding vector of the input image may be used to generate intermediate illuminant information, as described regarding operation 120. For example, the embedding vector of the input image may be obtained from an output layer or a hidden layer of illuminant information extraction model.

In operation 120, the electronic device may generate intermediate illuminant information from the original illuminant information by applying an illuminant information generation model.

The intermediate illuminant information may indicate a color-cast of an illuminant (also referred to herein as an "intermediate illuminant") to be applied to the input image through processes described later. The intermediate illuminant may be an illuminant popular with and/or preferred by a specific user, when applied to the input image based on the original illuminant information and/or the property of the input image. However, the intermediate illuminant is not so limited, and the intermediate illuminant may be any arbitrary illuminant. Similarly, the intermediate illuminant information need to represent any particular illuminant (real or otherwise), rather, its functional role within the overall method/device is of note.

According to one or more example embodiments, the intermediate illuminant information may include an R-value, a G-value, and/or a B-value indicating a chromaticity of the intermediate illuminant. According to one or more example embodiments, the intermediate illuminant information may indicate the chromaticity of the intermediate illuminant for respective partial area(s) of the input image. The intermediate illuminant information may include pixels corresponding to the pixels of the input image, and each pixel of the intermediate illuminant information may have a pixel value including an R-value, a G-value, or a B-value indicating the chromaticity of the intermediate illuminant.

For example, when a scene of a lawn is included in the input image, the user may express a green color of the lawn more strongly, and thus their preference for expressing the lawn more clearly may be known. In this case, the intermediate illuminant may be determined to be an illuminant with a chromaticity corresponding to the green color to express the lawn accurately (e.g., "true" to color). For example, when a scene of the sky is included in the input image, the user may express a blue color of the sky more strongly, and thus their preference for expressing the sky more clearly may be known. In this case, the intermediate illuminant may be determined to be an illuminant with a chromaticity corresponding to the blue color to express the sky accurately. In various example embodiments of the present disclosure, the "intermediate illuminant" may also be referred to as a "preferred illuminant" in that it is generally determined as an illuminant preferred by the user according to the property of the input image. However, a preferred illuminant may be determined in any manner.

According to one or more example embodiments, the electronic device may generate the intermediate illuminant information based on the input image and the original illuminant information. For example, the electronic device may generate the intermediate illuminant information from the embedding vector of the input image and the original illuminant information (both of which are based on the input image). For example, the electronic device may generate the intermediate illuminant information by applying the illuminant information generation model to the embedding vector of the input image and to the original illuminant information.

The illuminant information generation model may be generated and/or trained to output the intermediate illuminant information from the input image (or the embedding vector of the input image) and the original illuminant information. According to one or more example embodiments, the illuminant information generation model may be implemented based on a machine learning model and may be/include, for example, a neural network (e.g., a convolutional neural network (CNN)).

According to one or more example embodiments, the illuminant information generation model may be trained using training data including a training input image (or an embedding vector of the training input image), training original illuminant information mapped to the training input image, and GT target illuminant information mapped to the training input image. As, for training, the illuminant information generation model (hereinafter referred to as "temporary illuminant information generation model") is applied to the training input image (or the embedding vector of the training input image) and the training original illuminant information, temporary intermediate illuminant information may be output. In this case, the temporary target illuminant information may be determined based on the training original illuminant information and based on the temporary intermediate illuminant information. A weight for the training original illuminant information and a weight for the temporary intermediate illuminant information to be used to determine the temporary target illuminant information may be learned as learnable parameters in a training operation of training the illuminant information generation model. The temporary illuminant information generation model and/or temporary weights (e.g., the weight for the original illuminant information being learned and the weight for the intermediate illuminant information being learned) may be trained through supervised learning using the GT target illuminant information as a GT. For example, a loss may be calculated based on a difference between the temporary target illuminant information and the GT target illuminant information. In this case, parameters of the temporary illuminant information generation model may be updated iteratively based on the calculated loss such that the loss converges to a value smaller than a predetermined value. After the iterative update of the parameters of the temporary illuminant information generation model, the updating of the parameters of the temporary illuminant information generation model may be stopped and the temporary illuminant information generation model may be used as the illuminant information generation model.

Although the illuminant information extraction model and the illuminant information generation model are described as being trained independently according to various example embodiments, examples are not limited thereto.

According to one or more example embodiments, the temporary illuminant information extraction model and the temporary illuminant information generation model may be trained together in a dependent manner. For example, the training data may include the training input image, the GT original illuminant information mapped to the training input image, and the GT target illuminant information mapped to the training input image. As the temporary illuminant information extraction model is applied to the training input image, the temporary embedding vector and the temporary original illuminant information of the training input image may be obtained by inference. As the temporary illuminant information generation model is applied to the temporary embedding vector and the temporary original illuminant information, the temporary intermediate illuminant information may be obtained. As the temporary weight is applied to the temporary original illuminant information (or the GT original illuminant information) and the temporary intermediate illuminant information, the temporary target illuminant information may be obtained. The loss may be calculated based on the difference between the GT original illuminant information and the temporary original illuminant information, and the difference between the temporary target illuminant information and the GT target illuminant information. The parameters of the illuminant information extraction model, the parameters of the illuminant information generation model, or the weights may be learned or trained by being iteratively updated based on the calculated loss.

In operation 130, the electronic device may determine target illuminant information based on the extracted original illuminant information and the generated intermediate illuminant information. For example, the electronic device may determine the target illuminant information by combining a portion of the original illuminant information and a portion of the intermediate illuminant information. In this case, the target illuminant may replace the original illuminant as the illuminant that is applied to the input image.

According to one or more example embodiments, the target illuminant information may include an R-value, a G-value, and/or a B-value indicating a chromaticity of the target illuminant. According to one or more example embodiments, the target illuminant information may indicate the chromaticity of the target illuminant for each partial area of the input image. The target illuminant information may include pixels respectively corresponding to the pixels of the input image, and each pixel of the target illuminant information may have a pixel value including an R-value, a G-value, and/or a B-value indicating the chromaticity of the target illuminant.

According to one or more example embodiments, the electronic device may obtain a user input specifying a weight the original illuminant information and/or the intermediate illuminant information. The electronic device may determine the target illuminant information by combining the original illuminant information and the intermediate illuminant information based on the user input (e.g., based on the specified weight).

For example, the electronic device may determine a weight of each of the original illuminant information and the intermediate illuminant information based on the user input. The electronic device may combine a portion of the original illuminant information and a portion of the intermediate illuminant information based on the determined weight. Or, as described elsewhere herein, the electronic device may copy one or the other illuminant information (in whole or in part) to the target illuminant information.

For example, when the user desires to correct for the original illuminant under which the input image was captured, the user may set a first weight that favors the original illuminant information. For example, when the user desires to correct for another illuminant, e.g., one similar to the intermediate illuminant, the user may set a second weight that favors the original illuminant information. For example, the weight may range from 0 to 1, where 1 causes only the original illuminant information to be used, 0.5 causes an equal blend of the original and intermediate illuminants to be used, and 0 causes only the intermediate illuminant to be used.

According to one or more example embodiments, a sum of the weight for the original illuminant information and the weight for the intermediate illuminant information may be a constant (e.g., 1), and the weight for the original illuminant information and the weight for the intermediate illuminant information may have a value greater than or equal to zero (0) or less than or equal to 1.

For example, a pixel value of a pixel of the target illuminant information may be determined based on Equation 1 below.

Equation 1

$$L_{target} = \alpha L_{ori} + (1 - \alpha) L_{inter}$$

In Equation 1, $L_{ori}$ denotes original illuminant information, and $L_{inter}$ denotes intermediate illuminant information. $\alpha$ denotes a weight for the original illuminant information, and $(1 - \alpha)$ denotes a weight for the intermediate illuminant information. $L_{target}$ denotes target illuminant information.

According to one or more example embodiments, assuming that the original illuminant information, the intermediate illuminant information, and the target illuminant information each includes a respective plurality of pixels, the weight for the original illuminant information and the weight for the intermediate illuminant information may be determined independently (e.g. differently) based on the pluralities of pixels. For example, to determine pixel values of the respective pixels of the target illuminant information, the electronic device may apply a weight for the original illuminant information to the pixel values thereof, and may apply a weight for the intermediate illuminant information to the corresponding to pixel values thereof.

According to one or more example embodiments, the electronic device may determine the target illuminant information based on a bias of a sensor (e.g., camera sensor) used to obtain the input image. The bias of the sensor may include an R-value, a G-value, and a B-value measured by the sensor for an achromatic-color object (also simply referred to herein as an "achromatic object") under standard lighting (e.g., D50 lighting, D55 lighting, D65 lighting, etc.). In some implementations, the bias may be included in metadata of the input image. For example, each pixel value of the target illuminant information may be determined based on Equation 2 below.

$$Equation\ 2$$

$$L_{target} = \alpha \frac{L_{ori}}{L_{sens}} + (1 - \alpha)L_{inter}$$

In Equation 2, $L_{ori}$ denotes original illuminant information, and $L_{inter}$ denotes intermediate illuminant information. $\alpha$ denotes a weight for the original illuminant information, and (1 - $\alpha$) denotes a weight for the intermediate illuminant information. $L_{sens}$ denotes a sensor bias, and $L_{target}$ denotes target illuminant information.

However, various example embodiments of the present disclosure are not limited to combining the original illuminant information and the intermediate illuminant information based on the weights; the electronic device may determine, as the target illuminant information, the original illuminant information or the intermediate illuminant information based on an area in the input image. That is to say, the target illuminant information 270 may be made from varying parts of the original and intermediate illuminant information.

For example, a first area of the input image may correspond to the original illuminant information, and a second area (e.g., a remaining area of the input image excluding the first area) of the input image may correspond to the intermediate illuminant information. A pixel value of a pixel corresponding to the first area of the input image (among pixels of the target illuminant information) may be determined based on a pixel value of the same pixel in the original illuminant information. For example, it may be set to be the same as the pixel value of the same corresponding pixel of the original illuminant information. A pixel value of a pixel corresponding to the second area of the input image (among the pixels of the target illuminant information) may be determined based on a pixel value of the same pixel of the intermediate illuminant information. For example, it may be set to be the same as the pixel value of the same corresponding pixel of the intermediate illuminant information.

As may be appreciated, any of a variety of blending/merging/composition techniques may be used to construct target illuminant information from an original and intermediate illuminant information. For example, blending may be used or the full value of one or the other may be used. Such technique may be applied to the entire target illuminant information or a part thereof. Blending may be used for one part of the target illuminant information and the full value of either illuminant source may be used for another part of the target illuminant. Moreover, an area of the target illuminant information (to receive a blend of both illuminants or a copy of either of the illuminants) may be defined by object detection/recognition (e.g., using a segmentation algorithm). In addition, although user input is mentioned as a means of controlling blending/copying of source illuminant data, other means may be used. For example, heuristics, image processing algorithms, or the like may be used to select one source or the other, set a blend, determine where a blend or a copy is to be applied, and so forth.

In operation 140, the electronic device may generate an output image based on a result of applying the determined target illuminant information to the input image.

The output image may be an image of the same scene as the scene in the input image, but corrected from the input image. The output image may also be referred to as a corrected or adjusted version of the input image (referring to the correction/adjustment of pixel values of the input image to form the output image).

The electronic device may remove a color-cast of the original illuminant from the input image and add a color-cast of the target illuminant information to the input image.

For example, a pixel value of each pixel of the output image may be determined based on Equation 3:

$$Equation\ 3$$

$$I_{AWB} = R \cdot L_{target} = R \cdot L_{ori} \cdot \frac{L_{target}}{L_{ori}} = R \cdot L_{ori} \cdot \frac{\alpha L_{ori} + (1 - \alpha)L_{inter}}{L_{ori}}$$

In Equation 3, $I_{AWB}$ (AWB stands for auto white balance) denotes a pixel value of an output image, R denotes a pixel value in which a color-cast of an original illuminant is removed from an input image, and $L_{ori}$ denotes original illuminant

information. In addition, a R · L$_{ori}$ denotes a pixel value of the input image. L$_{target}$ denotes target illuminant information, and L$_{inter}$ denotes intermediate illuminant information. $\alpha$ denotes a weight for the original illuminant information, and (1 - $\alpha$) denotes a weight for the intermediate illuminant information.

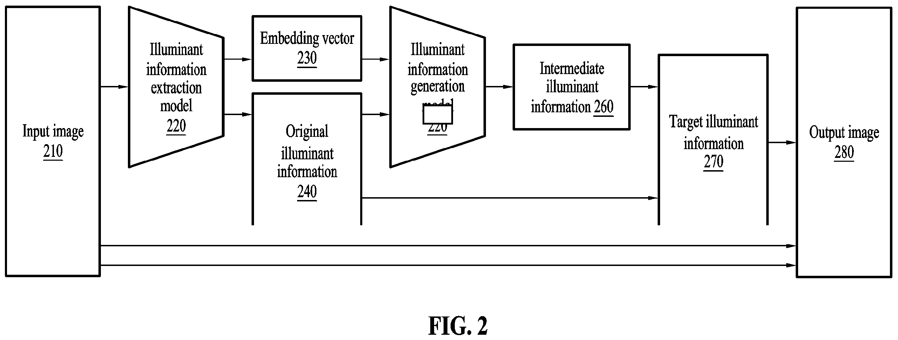

FIG. 2 illustrates an example operation to generate an output image by correcting an input image according to one or more example embodiments.

According to one or more example embodiments, the electronic device may apply an illuminant information extraction model 220 to an input image 210 to obtain an embedding vector 230 and original illuminant information 240 of the input image 210. The electronic device may apply an illuminant information generation model 250 to the embedding vector 230 and the original illuminant information 240 of the input image 210 to output intermediate illuminant information 260. The electronic device may combine the original illuminant information 240 and the intermediate illuminant information 260 to generate target illuminant information 270. The electronic device may remove a color-cast of an original illuminant from the input image 210 based on the original illuminant information 240 and add a color-cast of a target illuminant based on the target illuminant information 270, thereby generating an output image 280.

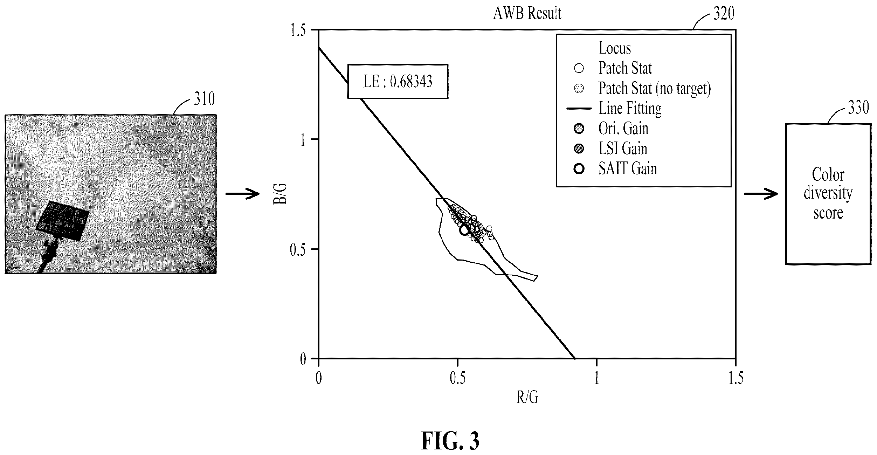

FIG. 3 illustrates an example operation to generate an output image based on color diversity of an input image according to one or more example embodiments.

According to one or more example embodiments, the electronic device may determine whether to apply an illuminant information extraction model (e.g., illuminant information extraction model 220) and an illuminant information generation model (e.g., illuminant information generation model 250) to an input image 310 based on a color diversity score corresponding to color diversity of the input image 310. The color diversity of the input image 310 may be, for example, a degree of diversity of colors indicated by pixel values of pixels in the input image 310. In the example of FIG. 3, the input image 310 is an image of a test pattern object.

When a color diversity score 330 is less than or equal to a threshold score, the electronic device may determine to apply the illuminant information extraction model and the illuminant information generation model. When the color diversity score 330 is greater than the threshold score, the electronic device may determine not to apply the illuminant information extraction model and the illuminant information generation model. For example, when the color diversity score 330 is greater than the threshold score, the electronic device may generate an output image from the input image 310 by applying AWB method.

The statistics-based AWB method may adjust pixel values of pixels of the input image 310 based on statistical values of the pixel values of the pixels of the input image 310. The statistics-based AWB method may include, as non-limiting examples, gray-world, gray-edge, shade of gray, and gray-pixel. The statistics-based AWB method may have relatively low complexity and a fast algorithm operation speed, but may have a white balancing performance that may be significantly degraded when the input image 310 does not conform to a statistical model suited for a corresponding method of the statistics-based AWB.

When the color diversity of the input image 310 is high, the WB performance of an operation of correcting the input image 310 to the output image through the statistics-based AWB method may also be high. In contrast, when the color diversity of the input image 310 is low, for example, when the input image 310 is obtained by capturing a scene including mainly green objects), the statistics-based AWB method may misrecognize pixels of the input image 310 as having similar chroma due to a color-cast of an original illuminant, and thus the WB performance of the operation of correcting the input image 310 to the output image may be low. As a result, according to one or more example embodiments, in a case in which the statistics-based AWB method is expected to operate with a relatively high WB performance, the electronic device may apply the statistics-based AWB method with a small computational amount. Likewise, in a case in which the statistics-based AWB method is expected to operate with a relatively low WB performance, the electronic device may perform a WB method based on the illuminant information extraction model and the illuminant information generation model with high WB performance.

According to one or more example embodiments, the color diversity may be determined based on linear regression performed on the pixel values. An example linear regression 320 result is shown in FIG. 3. The electronic device may perform the linear regression on the pixel values of the pixels of the input image 310. Each pixel may have a pixel value that has an R-value, a G-value, and a B-value. The electronic device may perform normalization on a pixel value based on the G-value, for example. The electronic device may obtain a first value obtained by dividing the R-value by the G-value (also referred to herein as "R/G value") and a second value obtained by dividing the B-value by the G-value (also referred to herein as "B/G value"). For each pixel, the electronic device may obtain a point that (i) sets a coordinate of a first axis (e.g., x-axis) to the first value (e.g., R/G value) and (ii) sets a coordinate of a second axis (e.g., y-axis) to the second value (e.g., B/G value) on a plane following an orthogonal coordinate system. The electronic device may obtain coordinates of points of the respective pixels of the input image 310 in this manner. The electronic device may perform the linear regression 320 on the points. The linear regression 320 may involve computation that models a linear correlation between the coordinate of the first axis and the coordinate of the second axis. The electronic device may obtain a parameters indicating a linear relationship between the coordinates of the first axis and the coordinates of the second axis by performing the linear regression 320.

For example, the electronic device may obtain linear parameters as per Equation 4:

Equation 4

$$y = a + b \cdot x$$

In Equation 4, x denotes a coordinate on the first axis, y denotes a coordinate on the second axis, and a and b denote coefficients obtained by performing the linear regression 320.

The electronic device may determine the color diversity score 330 indicating the color diversity based on a difference between a result of the linear regression 320 and the pixel values (as represented by the points). For example, as the differences between the result of the linear regression 320 and the pixel values (points) increases, the electronic device may determine the color diversity score 330 to be greater.

For example, the electronic device may obtain the color diversity score 330 based on Equation 5:

Equation 5

$$CD = \sum_i (y_i - (a + b \cdot x_i))^2$$

In Equation 5, CD denotes the color diversity score 330. $x_i$ denotes a coordinate of a point i on the first axis, and $y_i$ denotes a coordinate of the point i on the second axis. a and b denote coefficients obtained by performing the linear regression 320 (as per Equation 4).

Although the color diversity score 330 is described as determined mainly based on the linear regression 320 according to various example embodiments, examples are not limited thereto.

According to one or more example embodiments, the electronic device may perform, on the pixel values of the pixels of the input image 310, at least one of variance, standard deviation, principal component analysis, or clustering (e.g., K-means clustering), and determine the color diversity score 330 based on a result of the performing.

According to one or more example embodiments, the electronic device may determine the color diversity score 330 of the input image 310 by applying a color diversity determination model to the input image 310.

The color diversity decision model may be generated and/or trained to output the color diversity score 330 of the input image 310 from the input image 310. According to one or more example embodiments, the color diversity determination model may be implemented based on a machine learning model and may be/include, for example, a neural network (e.g., CNN).

According to one or more example embodiments, the color diversity determination model may be trained using training data including a training input image 310 and a GT color diversity score mapped to the training input image 310 (the training data including multiple such image-GT pairs). For example, the GT color diversity score may be calculated based on the linear regression 320, variance, standard deviation, principal component analysis, or clustering that is performed on pixel values of pixels of the training input image 310. As the color diversity determination model being trained (hereinafter referred to as a "temporary color diversity determination model") is applied to the training input image 310, a temporary color diversity score (inferred from the training input image 310) may be output. The temporary color diversity determination model may be trained through supervised learning using the GT color diversity score as a GT value. For example, a loss may be calculated based on a difference between the temporary color diversity score and the GT color diversity score. In this case, parameters of the temporary color diversity determination model may be updated iteratively based on the calculated loss such that the loss converges to a value smaller than a predetermined value. After the iterative update of the parameters of the temporary color diversity determination model, the updating of the parameters of the temporary color diversity determination model may be stopped and the temporary color diversity determination model may be obtained as the color diversity determination model. According to various example embodiments, the color diversity determination model is mainly described as being trained through supervised learning, but examples are not limited thereto, and the color diversity determination model may be trained and obtained through unsupervised learning.

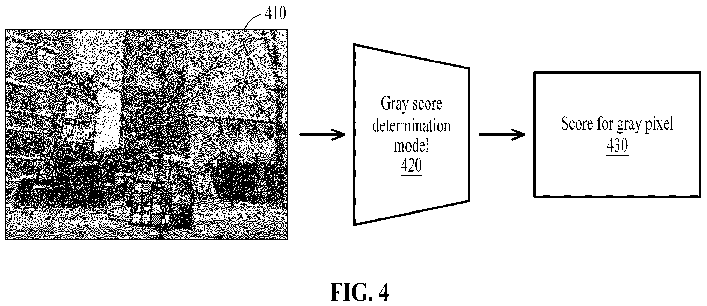

FIG. 4 illustrates an example of generating an output image based on a gray pixel-related score of an input image, according to one or more example embodiments.

According to one or more example embodiments, the electronic device may determine whether to apply an illuminant information extraction model and an illuminant information generation model to an input image 410 based on a score for a gray pixel 430 (also referred to herein as a "gray pixel-related score") in the input image 410. The gray pixel may correspond to an achromatic object. A gray pixel-related score 430 may relate to a pixel that is determined to be a gray pixel (also referred to herein as a "candidate gray pixel") corresponding to a real achromatic object. The candidate gray pixel may be either a real gray pixel or a fake gray pixel. A real gray pixel may correspond to a real achromatic object among pixels of the input image 410. A fake gray pixel may correspond to a chromatic-color object (also referred to herein as a "chromatic object") but appears to correspond to an achromatic object due to a color-cast of an original illuminant. According to one or more example embodiments, as a ratio of fake gray pixels (or estimated as such) among candidate gray pixels of the input image 410 increases, the gray pixel-related score 430 may have commensurately increase.

When the gray pixel-related score 430 is greater than a threshold score, the electronic device may determine to apply the illuminant information extraction model and the illuminant information generation model. When the gray pixel-related score 430 is less than or equal to the threshold score, the electronic device may determine not to apply the illuminant information extraction model and the illuminant information generation model. For example, when the gray pixel-related score 430 is less than or equal to the threshold score, the electronic device may generate an output image from the input image 410 by applying a statistics-based AWB method as described above.

When the gray pixel-related score 430 of the input image 410 is relatively low, the performance of correcting the input image 410 to the output image through the statistics-based AWB method may be high. In contrast, when the gray pixel-related score 430 of the input image 410 is relatively high, for example, when a probability of a candidate gray pixel being a fake gray pixel is high, the statistics-based AWB method may misrecognize the fake gray pixel as a real gray pixel and determine original illuminant information accordingly, and thus the WB performance of correcting the input image 410 to the output image may be low. As a result, according to one or more example embodiments, when the statistics-based AWB method is expected to operate with high WB performance, the electronic device may apply the statistics-based AWB method with a small computational amount. Likewise, when the statistics-based AWB method is expected to operate with low WB performance, the electronic device may perform a WB method based on the illuminant information extraction model and the illuminant information generation model with high performance.

A candidate gray pixel may be determined based on a gray locus. A gray locus is a range of pixel values of pixels corresponding to an achromatic object. The gray locus may include pixel values obtained when multiple original illuminants are respectively applied to the achromatic object. For example, the gray locus may be obtained as a line corresponding to the achromatic object in a coordinate space including two coordinates (e.g., an R/G coordinate and a B/G coordinate) corresponding to a pixel value normalized to a G-value or as an inner area of the line. The gray locus may be experimentally determined based on a result of obtaining images from the original illuminants of various chromaticities for the achromatic object (e.g., patch). Alternatively, the gray locus may be predetermined for a sensor (e.g., camera sensor). The electronic device may determine a pixel whose point (obtained by normalizing its pixel values to the G-value) is included in the gray locus, as a candidate gray pixel from among pixels of the input image 410.

According to one or more example embodiments, the electronic device may output the gray pixel-related score 430 of the input image 410 by applying a gray score determination model 420 to the input image 410.

The gray score determination model 420 may be generated and/or trained to output the gray pixel-related score 430 of the input image 410 from the input image 410. According to one or more example embodiments, the gray score determination model 420 may be implemented based on a machine learning model and may be/include, for example, a neural network (e.g., CNN). According to one or more example embodiments, the gray score determination model 420 may be trained through supervised learning based on a training input image and a GT score mapped to the training input image.

The GT score may be obtained based on the training input image and original illuminant information of the training input image. The original illuminant information of the training input image may include a color-cast of an original illuminant applied to the real training input image. From a pixel value of a candidate gray pixel of the training input image, a pixel value from which the color-cast of the original illuminant of the training input image is removed (hereinafter also referred to as a "corrected pixel value of the candidate gray pixel") may be obtained.

For example, the GT score may be determined based on an angular error between the corrected pixel value of the candidate gray pixel of the training input image and a pixel value indicating an achromatic color. The angular error may represent a ratio difference in R-value, G-value, and B-value between the corrected pixel value of the candidate gray pixel and the pixel value indicating the achromatic color. For example, when the training input image includes multiple candidate gray pixels, the GT score may be determined as a sum of angular errors of the candidate gray pixels.

The pixel value indicating the achromatic color may be a pixel value in which a ratio between an R-value, a G-value, and a B-value is 1:1:1, for example. For example, the R-value, the G-value, and the B-value may all include a pixel value of 1. For example, as the ratio between the R-value, the G-value, and the B-value of the corrected pixel value of the candidate gray pixel is closer to 1:1:1, the candidate gray pixel is more likely to correspond to an object with a chromaticity close to the achromatic color.

For example, the angular error may be determined based on Equation 6:

$$\text{Equation } 6$$

$$AE_i = \cos^{-1} \frac{\Gamma_i \cdot \Gamma_a}{\|\Gamma_i\| \|\Gamma_a\|}$$

In Equation 6, $AE_i$ denotes an angular error for a candidate gray pixel i. $\Gamma_i$ denotes a vector (e.g., a vector with a dimension of $1 \times 3$) corresponding to a corrected pixel value of the candidate gray pixel i, $\Gamma_a$ denotes a vector (e.g., [1, 1, 1]) corresponding to a pixel value indicating an achromatic color, and $\Gamma_i \cdot \Gamma_a$ denotes an inner product between the vectors $\Gamma_i$ and $\Gamma_a$.

For example, when the training input image includes multiple candidate gray pixels, the GT score may be determined based on Equation 7:

$$Equation\ 7$$

$$score_{gray} = \sum_i AE_i = \sum_i \cos^{-1} \frac{\Gamma_i \cdot \Gamma_a}{\|\Gamma_i\| \|\Gamma_a\|}$$

In Equation 7, $score_{gray}$ denotes a GT score of a training input image, and other notations may have substantially the same meanings as expressed in Equation 6.

According to one or more example embodiments, the electronic device may determine whether to apply the illuminant information extraction model and the illuminant information generation model to the input image 410 based on at least one of the color diversity of the input image 410 or the gray pixel-related score 430. According to one or more example embodiments, the electronic device may determine whether to apply the illuminant information extraction model and the illuminant information generation model to the input image 410 based on whether a first condition for the color diversity of the input image 410 (e.g., a color diversity score is less than or equal to a first threshold score), and/or a second condition for the gray pixel-related score 430 (e.g., the gray pixel-related score 430 exceeds a second threshold score) is satisfied.

For example, when both the first condition and the second condition are satisfied, the electronic device may apply the illuminant information extraction model and the illuminant information generation model to the input image 410. That is, when the color diversity score of the input image 410 is less than or equal to the first threshold score and the gray pixel-related score 430 of the input image 410 exceeds the second threshold score, the electronic device may determine to apply the illuminant information extraction model and the illuminant information generation model to the input image 410.

For another example, when at least one of the first condition or the second condition is satisfied, the electronic device may apply the illuminant information extraction model and the illuminant information generation model to the input image 410. That is, when the color diversity score of the input image 410 is less than or equal to the first threshold score or the gray pixel-related score 430 of the input image 410 exceeds the second threshold score, the electronic device may determine to apply the illuminant information extraction model and the illuminant information generation model to the input image 410.

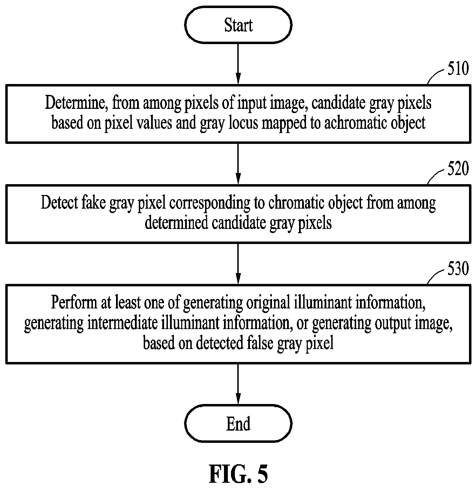

FIG. 5 illustrates an example of correcting an image using a fake gray pixel, according to one or more example embodiments.

According to one or more example embodiments, the electronic device may generate an output image from an input image based on a fake gray pixel included in the input image.

In operation 510, the electronic device may determine candidate gray pixels from among pixels of the input image based on a pixel value and a gray locus mapped to an achromatic object.

As described above with reference to FIG. 4, the gray locus, which is a range of pixel values of pixels corresponding to an achromatic object, may include a line corresponding to the achromatic object and/or an inner area of the line, in a coordinate space including two coordinates (e.g., R/G coordinate and B/G coordinate) corresponding to a pixel value normalized to a G-value.

The electronic device may determine, to be a candidate gray pixel, a pixel whose point corresponding to its pixel value (as normalized to the G-value) is a point on the gray locus or a pixel within the gray locus.

In operation 520, the electronic device may detect a fake gray pixel corresponding to a chromatic object from among the determined candidate gray pixels. The electronic device may detect the fake gray pixel using a gray pixel detection model. The gray pixel detection model may have been generated and/or trained to output a real gray map from an input image. According to one or more example embodiments, the gray pixel detection model may be implemented based on a machine learning model and may include, for example, a neural network (e.g., CNN). According to one or more example embodiments, the gray pixel detection model may be trained through supervised learning based on a training input image and a GT real gray map mapped to the training input image.

The real gray map may indicate whether pixels in the input image are real gray pixels. The pixels in the real gray map may individually respectively correspond to the pixels in the input image.

For example, each pixel of the real gray map may have a pixel value indicating whether a pixel of the input image is a real gray pixel. The electronic device may detect, as a fake gray pixel, a pixel of the input image that has a pixel value indicating that the pixel is not a real gray pixel among the pixels of the real gray map and correspond to a candidate gray pixel.

For example, when a pixel of the real gray map is a candidate gray pixel, the pixel may have a pixel value that is based on an angular error between a corrected pixel value of the candidate gray pixel and a pixel value indicating an achromatic color. The electronic device may detect, as a fake gray pixel, a pixel of the input image that has a pixel value exceeding a threshold angular error and corresponds to the candidate gray pixel among the pixels of the real gray map.

In operation 530, the electronic device may perform generating original illuminant information, generating intermediate illuminant information, determining target illuminant information, or generating an output image, based on the detected fake gray pixel.

For example, the electronic device may further input the real gray map along with the input image to an illuminant information extraction model (e.g., the illuminant information extraction model 220 of FIG. 2) to generate the original illuminant information.

For example, the electronic device may further input the real gray map along with an embedding vector of the input image (e.g., the embedding vector 230 of FIG. 2) and/or the original illuminant information (e.g., the original illuminant information 240 of FIG. 2) to an illuminant information generation model (e.g., the illuminant information generation model 250 of FIG. 2) to generate the intermediate illuminant information.

For example, the electronic device may combine the original illuminant information and intermediate illuminant information based on a pixel indicated as the fake gray pixel by the real gray map.

According to one or more example embodiments, the electronic device may generate an output image from an input image by performing a statistics-based AWB method based on a detected fake gray pixel. For example, the electronic device may perform the statistics-based AWB method by applying a weight to the detected fake gray pixel.

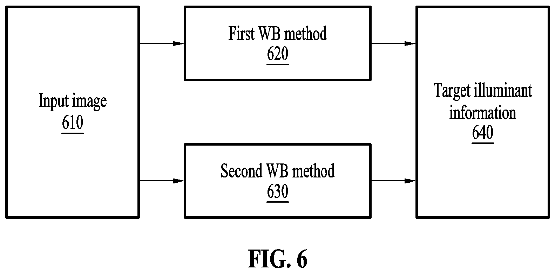

FIG. 6 illustrates an example of correcting an image using multiple WB methods, according to one or more example embodiments.

According to one or more example embodiments, the electronic device may calculate target illuminant information 640 based on multiple WB methods.

The electronic device may determine first partial target illuminant information by applying a first WB method 620 based on an input image 610. For example, the first WB method 620 may include an operation of determining the target illuminant information 640 based on the illuminant information extraction model and the illuminant information generation model described above with reference to FIGS. 1 and 2.

The electronic device may determine second partial target illuminant information by applying a second WB method 630 based on the input image 610. For example, the second WB method 630 may be/include any of the statistics-based WB methods noted above.

The electronic device may determine the target illuminant information 640 by combining the first partial target illuminant information and the second partial target illuminant information using a ratio, or, a weight corresponding to the first partial target illuminant information and a weight corresponding to the second partial target illuminant information. According to one or more example embodiments, the sum of a first weight for the first partial target illuminant information and a second weight for the second partial target illuminant information may be a constant. The first weight and the second weight may be greater than or equal to zero (0) and less than or equal to 1.

According to one or more example embodiments, the first weight and/or the second weight may be determined based on the performance predicted from the first WB method 620 and/or the performance predicted from the second WB method 630. For example, the electronic device may determine the first weight based on a color diversity score of the input image 610 or a gray pixel-related score of the input image 610. As the color diversity score of the input image 610 increases, the electronic device may determine the first weight to be a smaller value and the second weight to be a larger value. As the gray pixel-related score of the input image 610 increases, the electronic device may determine the first weight to be a larger value and the second weight to be a smaller value.

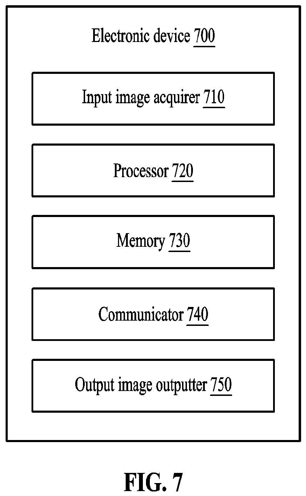

FIG. 7 illustrates an example configuration of an electronic device according to one or more example embodiments.

According to one or more example embodiments, an electronic device 700 may include an input image acquirer 710, a processor 720, a memory 730, a communicator 740, and an output image outputter 750. In practice, the processor 720 may be a single processor, or a combination of processors (types of which are described below). In some embodiments, the electronic device 700 may be a camera that includes one or more image sensors that capture an image for which WB is to be performed.

The input image acquirer 710 (e.g., sensor(s)) may obtain an input image. The input image acquirer 710 may transmit the obtained input image to the processor 720.

The processor 720 may extract original illuminant information from the input image based on an illuminant information extraction model. The processor 720 may generate intermediate illuminant information from the input image and the original illuminant information, based on an illuminant information generation model. The processor 720 may determine target illuminant information based on the original illuminant information and the intermediate illuminant information. The processor 720 may generate an output image based on a result of applying the target illuminant information to the input image.

The memory 730 may temporarily and/or permanently store at least one of the illuminant information extraction model, the input image, the original illuminant information, the illuminant information generation model, the intermediate illuminant information, the target illuminant information, or the output image. The memory 730 may store instructions for extracting the original illuminant information, generating the intermediate illuminant information, determining the target illuminant information, and/or generating the output image. However, this is provided only as an example, and information to be stored in the memory 730 is not limited thereto.

The communicator 740 may transmit and receive at least one of the illuminant information extraction model, the input image, the original illuminant information, the illuminant information generation model, the intermediate illuminant information, the target illuminant information, or the output image. The communicator 740 may establish a wired communication channel and/or a wireless communication channel with an external device (e.g., another electronic device 700 and a server). For example, it may establish communication through cellular communication, short-range wireless communication, local area network (LAN) communication, Bluetooth, wireless fidelity (WiFi) direct or infrared data association (IrDA), legacy cellular network, fourth generation (4G) and/or fifth generation (5G) network, next-generation communication, the Internet, or long-range communication network such as computer networks (e.g., LAN or wide area network (WAN)).

The output image outputter 750 may receive the output image generated by the processor 720 and output the received output image. For example, the output image outputter 750 may be implemented as a display and display the output image (the display may or may not be a component of the electronic device 700). For example, the output image outputter 750 may be implemented as the communicator 740 and transmit the output image to an external device.

The computing apparatuses, the electronic devices, the processors, the memories, the image sensors, the displays, the information output system and hardware, the storage devices, and other apparatuses, devices, units, modules, and components described herein with respect to FIGS. 1-7 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-7 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

The scope of the invention is defined by the claims, and all variations within the scope of the claims and their equivalents are to be construed as being included in the invention.

**Claims**

1. A method for performing by an electronic device, the method comprising:

   extracting, from an input image, original illuminant information representing an original illuminant color-cast of the input image, the extracting performed by applying an illuminant information extraction model to the input image;
   generating, from the original illuminant information, intermediate illuminant information representing an intermediate illuminant color-cast of the input image, the generating performed by applying an illuminant information generation model to the original illuminant information;
   determining target illuminant information based on the extracted original illuminant information and based on the generated intermediate illuminant information; and
   generating an output image by applying the determined target illuminant information to the input image.

2. The method of claim 1, wherein the determining of the target illuminant information comprises combining at least a portion of the original illuminant information and at least a portion of the intermediate illuminant information.

3. The method of any one of claims 1-2, wherein the generating of the output image comprises:
   removing the original illuminant color-cast from the input image and adding a color-cast of the target illuminant information to the input image.

4. The method of any one of claims 1-3, wherein the determining of the target illuminant information comprises:

obtaining a user input and according thereto controlling contribution of the original illuminant information or the intermediate illuminant information to the target illuminant information.

5. The method of any one of claims 1-4, further comprising:

outputting an embedding vector produced by the illuminant information extraction model in extracting the original illuminant information from the input image,
wherein the intermediate illuminant information is generated by applying the illuminant information generation model to the embedding vector of the input image and to the original illuminant information.

6. The method of any one of claims 1-5, further comprising:

determining whether to apply the illuminant information extraction model and the illuminant information generation model to the input image, based on color diversity of the input image,
optionally wherein the determining of whether to apply the illuminant information extraction model and the illuminant information generation model to the input image based on the color diversity of the input image comprises:
performing linear regression on pixel values of pixels of the input image; and
determining a color diversity score based on a difference between a result of the linear regression and the pixel values, the color diversity score indicating the color diversity,
optionally wherein the determining of whether to apply the illuminant information extraction model and the illuminant information generation model to the input image based on the color diversity of the input image comprises:
determining a color diversity score of the input image by applying a color diversity determination model to the input image.

7. The method of any one of claims 1-5, further comprising:
determining whether to apply the illuminant information extraction model and the illuminant information generation model to the input image, based on a score for a gray pixel corresponding to an achromatic-color object in the input image.

8. The method of any one of claims 1-5, further comprising:

determining candidate gray pixels from among pixels of the input image based on a pixel value and a gray locus mapped to an achromatic-color object;
detecting a fake gray pixel corresponding to a chromatic-color object from among the determined candidate gray pixels; and
based on the detected fake gray pixel, either generating the original illuminant information, generating the intermediate illuminant information, determining the target illuminant information, or generating the output image.

9. A non-transitory computer-readable storage medium storing instructions that, when executed by one or more processors, configures the one or more processors to perform the method of any one of claims 1-8.

10. A computer program product comprising instructions for performing the method according to any one of claims 1-8.

11. An electronic device, comprising:

one or more processors; and
memory storing instructions configured to cause the one or more processors to:

extract, from an input image, original illuminant information representing an original illuminant color-cast of the input image, the extracting performed by applying an illuminant information extraction model to the input image;
generate intermediate illuminant information representing an intermediate illuminant color-cast of the input image by applying an illuminant information generation model to the original illuminant information;
determine target illuminant information based on the extracted original illuminant information and based on the generated intermediate illuminant information; and
generate an output image by applying the determined target illuminant information to the input image.

**12.** The electronic device of claim 11, wherein the instructions are further configured to cause the one or more processors to:
determine the target illuminant information by combining at least a portion of the original illuminant information and at least a portion of the intermediate illuminant information.

**13.** The electronic device of any one claims 11-12, wherein the instructions are further configured to cause the one or more processors to:
remove the original illuminant color-cast from the input image and add a color-cast of the target illuminant information to the input image.

**14.** The electronic device of any one of claims 11-13, wherein the instructions are further configured to cause the one or more processors to:
obtain a user input and according thereto controlling contribution of the original illuminant information or the intermediate illuminant information to the target illumination information.

**15.** The electronic device of any one of claims 11-14, wherein the instructions are further configured to cause the one or more processors to:

output an embedding vector produced by the illuminant information extraction model in extracting the original illuminant information from the input image; and
generate the intermediate illuminant information by applying the illuminant information generation model to the embedding vector of the input image and to the original illuminant information.

```
                    ┌─────────────┐
                    │    Start    │
                    └──────┬──────┘
                           │                           ╱─110
        ┌──────────────────▼─────────────────────────────┐
        │   Extract, from input image, original illuminant information │
        │ including color cast of original illuminant applied to input image, │
        │       using illuminant information extraction model         │
        └──────────────────┬─────────────────────────────┘
                           │                           ╱─120
        ┌──────────────────▼─────────────────────────────┐
        │   Generate, from original illuminant information, intermediate │
        │ illuminant information including color cast of intermediate illuminant to be │
        │   applied to input image, using illuminant information generation model │
        └──────────────────┬─────────────────────────────┘
                           │                           ╱─130
        ┌──────────────────▼─────────────────────────────┐
        │   Determine target illuminant information based on extracted original │
        │ illuminant information and generated intermediate illuminant information │
        └──────────────────┬─────────────────────────────┘
                           │                           ╱─140
        ┌──────────────────▼─────────────────────────────┐
        │   Generate output image based on applying of determined target illuminant │
        │                  information to input image                 │
        └──────────────────┬─────────────────────────────┘
                           │
                    ┌──────▼──────┐
                    │     End     │
                    └─────────────┘
```

# FIG. 1

Input image
210

→

Illuminant
information
extraction
model
220

→

Embedding vector
230

→

Illuminant
information
generation
model
220

→

Intermediate
illuminant
information 260

→

Target illuminant
information
270

→

Output image
280

Original
illuminant
information
240

**FIG. 2**

FIG. 3

EP 4 564 801 A1

FIG. 4

Start

510

Determine, from among pixels of input image, candidate gray pixels based on pixel values and gray locus mapped to achromatic object

520

Detect fake gray pixel corresponding to chromatic object from among determined candidate gray pixels

530

Perform at least one of generating original illuminant information, generating intermediate illuminant information, or generating output image, based on detected false gray pixel

End

**FIG. 5**

Input image
610

First WB method
620

Second WB method
630

Target illuminant
information
640

**FIG. 6**

Electronic device 700

Input image acquirer 710

Processor 720

Memory 730

Communicator 740

Output image outputter 750

**FIG. 7**

Europäisches
Patentamt

European
Patent Office

Office européen
des brevets

# EUROPEAN SEARCH REPORT

**Application Number**

EP 24 21 6578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/292635 A1 (KANG NAHYUP [KR] ET AL) 15 September 2022 (2022-09-15) | 1-6,9-15 | INV.<br>H04N1/60 |
| Y | * paragraph [0060] - paragraph [0128]; | 7 | G06T5/60 |
| A | figures 6, 7, 10 * | 8 | G06T7/90 |
|   | - - - - - |   | G06V10/56 |
| Y | US 2022/141438 A1 (OSADCHIY ILYA [IL] ET AL) 5 May 2022 (2022-05-05) | 7 |   |
| A | * paragraph [0013] - paragraph [0014] * | 1-6,9-15 |   |
|   | - - - - - |   |   |
| A | COOPER T ET AL: "Novel approach to color cast detection and removal in digital images",<br>20000101,<br>vol. 3963, 1 January 2000 (2000-01-01),<br>pages 167-177, XP002471492,<br>DOI: 10.1117/12.373394<br>* page 168 * | 1-15 |   |
|   | - - - - - |   |   |

**TECHNICAL FIELDS
SEARCHED      (IPC)**

H04N
G06V
G06T

The present search report has been drawn up for all claims

| Place of search | Date of completion of the search | Examiner |
|---|---|---|
| The Hague | 15 April 2025 | Lauritzen, Jan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 24 21 6578

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2025

| Patent document cited in search report | Publication date | Patent family member(s) | | Publication date |
|---|---|---|---|---|
| US 2022292635 A1 | 15-09-2022 | CN | 115082328 A | 20-09-2022 |
| | | EP | 4057609 A1 | 14-09-2022 |
| | | US | 2022292635 A1 | 15-09-2022 |
| US 2022141438 A1 | 05-05-2022 | KR | 20220060966 A | 12-05-2022 |
| | | US | 2022141438 A1 | 05-05-2022 |
| | | US | 2022377297 A1 | 24-11-2022 |

EPO FORM P0459

For more details about this annex : see Official Journal of the European Patent Office, No. 12/82